# EUROPÄISCHE PATENTANMELDUNG

(11) **EP 4 421 573 A1**
(43) Veröffentlichungstag der Anmeldung: **28.08.2024**
(21) Anmeldenummer: 24153292.8
(22) Anmeldetag: 22.01.2024
(51) Int. Cl.: G05B 19/042

(54) **VERFAHREN ZUR ERKENNUNG EINER TECHNISCHEN GERÄTEFUNKTION**

(30) Priorität: 27.02.2023 DE 102023104691
(71) Anmelder: Deere & Company, Moline, IL 61265 (US)
(72) Erfinder: BAUM, BERND, 68163 Mannheim (DE); SCHMIDT, MARTIN, 68163 Mannheim (DE); BIZIOREK, STÉPHANE, 68163 Mannheim (DE)
(74) Vertreter: Dehnhardt, Florian Christopher

(57) **Zusammenfassung**

Die Erfindung betrifft ein Verfahren zur Erkennung einer an eine Anschluss-Schnittstelle (16) eines Fahrzeugs (10) angeschlossenen technischen Funktion (func_Gy) eines Gerätes (12). Die Anschluss-Schnittstelle (16) weist mehrere Fahrzeuganschlüsse (Ex) auf und das Gerät (12) weist mehrere Geräteanschlüsse (Gy) auf, von denen mindestens ein Geräteanschluss (Gy) mit einem der Fahrzeuganschlüsse (Ex) verbunden ist. Die miteinander verbundenen Fahrzeuganschlüsse (Ex) und Geräteanschlüsse (Gy) bilden eine Anschlusskonfiguration, welche optisch erfasst wird. In Abhängigkeit von der optisch erfassten Anschlusskonfiguration wird eine vordefinierte technische Funktion (func_Gy) des Geräteanschlusses (Gy) dem mit ihm verbundenen Fahrzeuganschluss (Ex) zugeordnet. In Abhängigkeit von sämtlichen derartigen Zuordnungen wird eine Konfigurationsinformation (info_Kon) bereitgestellt zur Erkennung der technischen Funktion (func_Gy) an dem Fahrzeuganschluss (Ex).

## Beschreibung

Die Erfindung betrifft ein Verfahren zur Erkennung einer technischen Gerätefunktion, welche an eine Anschluss-Schnittstelle eines Fahrzeugs angeschlossen ist.

Fahrzeuge mit Energie erzeugenden Systemen, wie etwa Traktoren mit einem Dieselmotor, weisen häufig Fahrzeuganschlüsse auf, über die sie eine Systemenergie des Fahrzeugs direkt oder in umgewandelter Energieform an unterschiedliche Geräte übertragen können. Vom Fahrzeug aus lassen sich diese Geräte dann bedienen oder ansteuern.

Der Erfindung liegt die Aufgabe zugrunde, die Steuerung eines an das Fahrzeug angeschlossenen Gerätes zu vereinfachen.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 sind bei einem Verfahren zur Erkennung einer an eine Anschluss-Schnittstelle eines Fahrzeugs angeschlossenen technischen Funktion eines Gerätes an der Anschluss-Schnittstelle mehrere Fahrzeuganschlüsse vorgesehen und an dem Gerät mehrere Geräteanschlüsse vorgesehen. Dabei ist mindestens ein Geräteanschluss mit einem der vorhandenen Fahrzeuganschlüsse verbunden (z.B. pneumatisch, fluidisch, hydraulisch, elektrisch).

Die miteinander verbundenen Fahrzeuganschlüsse und Geräteanschlüsse bilden eine Anschlusskonfiguration, welche optisch erfasst wird. In Abhängigkeit von der optisch erfassten Anschlusskonfiguration wird eine vordefinierte technische Funktion des Geräteanschlusses dem mit diesem Geräteanschluss verbundenen Fahrzeuganschluss zugeordnet. Abhängig von sämtlichen Zuordnungen technischer Funktionen bei dieser Anschlusskonfiguration wird eine Konfigurationsinformation bereitgestellt, mit deren Hilfe die technische Funktion des jeweiligen Fahrzeuganschlusses erkannt wird.

Hierdurch wird mit einfachen technischen Mitteln eine Information darüber bereitgestellt, welche technische Funktion aktuell an welchem Fahrzeuganschluss der Anschluss-Schnittstelle angeschlossen ist (z.B. pneumatisch, fluidisch, hydraulisch, elektrisch). Somit kann die Bedienung des jeweiligen angeschlossenen Gerätes vom Fahrzeug aus vereinfacht und automatisiert durchgeführt werden. Die Bereitstellung der Konfigurationsinformation(en) ist auch für Steuerungssysteme vorteilhaft, welche einerseits datentechnisch mit dem Fahrzeug verbunden sind und andererseits zur Steuerung von Geräten ausgebildet sind. Mittels der bereitgestellten Konfigurationsinformation(en) kann ein derartiges Steuerungssystem das zugeordnete Gerät vereinfacht und zumindest teilweise selbstständig steuern.

Das vorgenannte Steuerungssystem ist beispielsweise als ein sogenannter Jobrechner ausgebildet, welcher vorzugsweise über ein Bussystem (z.B. ISO, CAN) mit dem Fahrzeug (z.B. Traktor) bzw. dessen Bedien-Schnittstelle verbunden ist und mit Kenntnis der Konfigurationsinformation(en) das zugeordnete Gerät (z.B. landwirtschaftliches Anbaugerät) einfacher und automatisiert ansteuern kann.

Vorzugsweise handelt es sich bei dem Fahrzeug um ein landwirtschaftliches Nutzfahrzeug, insbesondere einen Traktor.

Das Gerät ist vorzugsweise zur Durchführung landwirtschaftlicher Arbeiten ausgebildet. Insbesondere ist das Gerät als ein Anbaugerät an den Traktor angeschlossen.

Vorzugsweise wird zeitlich vor der optischen Erfassung der Anschlusskonfiguration, insbesondere bereits vor dem Anschließen des Gerätes an die Anschluss-Schnittstelle, das Fahrzeug ausgewählt und dann durch eine fahrzeugspezifische Kennung repräsentiert. Analog kann auch ein Gerät ausgewählt werden, welches dann zur weiteren Durchführung des Verfahrens durch eine das Gerät repräsentierende gerätespezifische Kennung repräsentiert wird. Die jeweilige Kennung kann durch Auswählen eines Fahrzeugs oder eines Gerätes (z.B. durch Eingabe in einem Auswahlmenü) generiert oder erfasst werden. Durch das Verwenden der jeweiligen Kennung kann das Verfahren eindeutig und automatisiert auf ein bestimmtes Fahrzeug und/oder Gerät angewendet werden. Mittels der Kennung kann automatisiert auf fahrzeugspezifische und/oder gerätespezifische Daten zugegriffen werden (z.B. in einer geeigneten Datenverarbeitungseinheit), um die Verfahrensdurchführung zur Erkennung der technischen Funktion an dem jeweiligen Fahrzeuganschluss zu unterstützen.

Die fahrzeugspezifische Kennung wird beispielsweise automatisch von dem Anwendungsprogramm generiert oder über Bilddaten (z.B. Foto eines Typenschildes, einer anderen im Fahrzeug angezeigten Kodierung oder eines Barcodes, QR-Codes) oder über Funkdaten (z.B. Bluetooth, Wifi) erfasst und der Datenverarbeitungseinheit zur Verfügung gestellt.

Die gerätespezifische Kennung wird beispielsweise automatisch von dem Anwendungsprogramm generiert. Alternativ wird diese Kennung beispielsweise über Bilddaten (z.B. Typenschild, Barcode, QR-Code) oder über Funkdaten (z.B. Bluetooth, Wifi) erfasst und der vorgenannten Datenverarbeitungseinheit zur Verfügung gestellt.

Die Kennung kann auch dazu genutzt werden, im Rahmen einer Einlern- oder Initialisierungsphase fahrzeugspezifische und/oder gerätespezifische Daten zu erzeugen und diese der jeweiligen fahrzeugspezifischen und/oder gerätespezifischen Kennung zuzuordnen. Diese Daten können dann bei einer Anschlusskonfiguration zwischen einem Fahrzeug und einem daran angeschlossenen Gerät automatisiert abgerufen werden, um einzelne Verfahrensschritte zur Erkennung der technischen Funktion an dem jeweiligen Fahrzeuganschluss zu unterstützen.

Vorteilhaft sind dem Fahrzeug Fahrzeugprofil-Daten zugeordnet, welche mindestens ein Anschlussmerkmal (z.B. Farbkodierung, Position, Produktionsinformation des Herstellers) der Fahrzeuganschlüsse dieses Fahrzeugs repräsentieren. Hierdurch wird berücksichtigt, dass die Anschluss-Schnittstelle bei unterschiedlichen Fahrzeugtypen unterschiedlich ausgebildet ist. Durch die zugeordneten Fahrzeugprofil-Daten entsteht ein hinsichtlich der Fahrzeuganschlüsse eindeutiges Fahrzeugprofil, welches abgespeichert werden kann und im Falle einer Anschlusskonfiguration dieses Fahrzeugs mit einem Gerät wieder abrufbar ist. Für dieses Fahrzeug ist folglich die Anschlussstruktur bzw. das Anschlussschema seiner Anschluss-Schnittstelle bekannt. Hierdurch können während der Verfahrensdurchführung relevante Daten technisch einfach und eindeutig bereitgestellt werden.

Die vorgenannte Zuordnung der Fahrzeugprofil-Daten zu einem Fahrzeug erfolgt vorzugsweise im Rahmen einer Einlern- oder Initialisierungsphase, z.B. durch Starten eines spezifischen Anwendungsprogrammes. Dabei können einzelne Fahrzeuge in einem Datenspeicher einer Datenverarbeitungseinheit erfasst und angelegt werden und dem jeweils angelegten Fahrzeug bzw. dessen fahrzeugspezifischer Kennung spezifische Fahrzeugprofil-Daten zugeordnet werden.

Vorzugsweise werden die Fahrzeugprofil-Daten in Abhängigkeit von einer optischen Erfassung der Anschluss-Schnittstelle des elektronisch angelegten Fahrzeugs in (bezüglich eines Gerätes) unverbundenem Zustand generiert. Beispielsweise werden hierbei ein oder mehrere Fotos der Anschluss-Schnittstelle bzw. sämtlicher Fahrzeuganschlüsse erstellt. Ein bildverarbeitendes Programm kann die Fahrzeuganschlüsse erkennen und unterscheiden und daraus die Fahrzeugprofil-Daten erstellen.

Der Vorgang der optischen Erfassung der Anschluss-Schnittstelle wird vorzugsweise nur einmalig durchgeführt. In einer bevorzugten Ausführungsform können die Fahrzeugprofil-Daten noch individuell verändert werden, bevor sie dem angelegten Fahrzeug zugeordnet werden.

In einer weiteren bevorzugten Ausführungsform sind der gerätespezifischen Kennung Geräteprofil-Daten zugeordnet, welche mindestens ein Anschlussmerkmal der Geräteanschlüsse dieses Gerätes repräsentieren. Durch die zugeordneten Geräteprofil-Daten entsteht ein hinsichtlich der Geräteanschlüsse eindeutiges Geräteprofil, welches abgespeichert werden kann und im Falle einer Anschlusskonfiguration dieses Gerätes mit einem Fahrzeug wieder abrufbar ist. Hierdurch können während der Verfahrensdurchführung relevante Daten technisch einfach und eindeutig bereitgestellt werden.

Die vorgenannte Zuordnung der Geräteprofil-Daten zu einer gerätespezifischen Kennung erfolgt vorzugsweise im Rahmen einer Einlern- oder Initialisierungsphase, z.B. durch Starten eines spezifischen Anwendungsprogrammes. Dabei können einzelne Geräte mittels der jeweiligen Kennung in einem Datenspeicher einer Datenverarbeitungseinheit erfasst und angelegt werden. Der jeweiligen gerätespezifischen Kennung können dann spezifische Geräteprofil-Daten zugeordnet werden. Vorteilhaft werden nacheinander alle Geräte angelegt, die für einen Anschluss ganz allgemein in Frage kommen oder für den Anschluss an ein bestimmtes Fahrzeug berücksichtigt werden sollen.

Vorzugsweise werden die Geräteprofil-Daten in Abhängigkeit von einer optischen Erfassung der Geräteanschlüsse in (bezüglich eines Fahrzeugs) unverbundenem Zustand des erfassten bzw. angelegten Gerätes generiert. Beispielsweise wird hierbei mindestens ein Foto von jedem einzelnen Geräteanschluss und/oder von sämtlichen Geräteanschlüssen gemeinsam erstellt. Die Fotos können aus unterschiedlichen Positionen erstellt sein. Ein bildverarbeitendes Programm kann die Geräteanschlüsse erkennen und unterscheiden und daraus die Geräteprofil-Daten erstellen. In einer bevorzugten Ausführungsform können die Geräteprofil-Daten noch individuell verändert werden, bevor sie dem angelegten Gerät zugeordnet werden.

Der Vorgang der optischen Erfassung wird vorzugsweise nur einmalig durchgeführt. Sollten sich Anschlussmerkmale einzelner Geräteanschlüsse ändern, werden die Geräteprofil-Daten in Abhängigkeit von einer erneuten optischen Erfassung der Geräteanschlüsse aktualisiert.

Ein Anschlussmerkmal eines Geräteanschlusses wird vorteilhaft dadurch realisiert, dass dieser Geräteanschluss eine optische Kennzeichnung (z.B. Farbe und/oder Form) aufweist. Vorzugsweise handelt es sich hierbei um Kennzeichnungs-Elemente, welche technisch einfach an die Geräteanschlüsse montierbar und eindeutig voneinander unterscheidbar sind. Die Kennzeichnungs-Elemente sind beispielsweise durch unterschiedliche Farben und/oder Formen voneinander unterscheidbar. Insbesondere sind die Kennzeichnungs-Elemente als Standardbauteile kostengünstig erhältlich.

Vorzugsweise enthält das Anschlussmerkmal die vordefinierte technische Funktion des Geräteanschlusses. Die jeweilige technische Funktion wird z.B. vordefiniert, indem ein Benutzer die technische Funktion des jeweiligen Geräteanschlusses identifiziert oder bestimmt und dann in Form einer Dateneingabe (z.B. als Text) über eine Bedien-Schnittstelle für das Geräteprofil zur Verfügung stellt.

Insbesondere wird die technische Funktion des jeweiligen Geräteanschlusses vordefiniert, indem erst nach der optischen Erfassung des Geräteanschlusses oder sämtlicher Geräteanschlüsse des Gerätes den entsprechenden optischen Daten bzw. Bilddaten die jeweilige technische Funktion zugeordnet wird. Dies kann in der vorbeschriebenen Weise erfolgen, indem den optischen Daten bzw. Bilddaten des jeweiligen Geräteanschlusses eine zusätzliche Information (z.B. Dateneingabe, Text) zugewiesen wird.

Das Verfahren lässt sich vorteilhaft anwenden, wenn ein Fahrzeug mit einem Energie erzeugenden System (z.B. Elektromotor, Dieselmotor) über seine Anschluss-Schnittstelle Systemenergie (unmittelbar oder in umgewandelter Form) an unterschiedliche anschließbare Geräte übertragen soll. In solchen Anwendungsfällen ist mindestens ein Fahrzeuganschluss als ein Energieanschluss zur Energieabgabe (z.B. elektrisch, pneumatisch, hydraulisch, fluidisch) an einen Geräteanschluss ausgebildet.

Insbesondere ist mindestens ein an einer Anschlussleitung des Gerätes angeordneter Geräteanschluss zur Energieaufnahme (z.B. elektrisch, pneumatisch, hydraulisch, fluidisch) von einem Fahrzeuganschluss ausgebildet.

Zur Unterstützung der Durchführung des Verfahrens oder zumindest einzelner Verfahrensschritte sind vorzugsweise eine Bilddaten generierende Einheit und eine datenverarbeitende Einheit vorgesehen. Beide Funktionseinheiten können physikalisch kombiniert oder getrennt ausgebildet sein. Sie können Bestandteil einer Erkennungsvorrichtung sein, welche vorzugsweise als ein mobiles Gerät ausgebildet ist. Vorteilhaft erfolgt diese Datengenerierung und -verarbeitung mittels standardmäßig vorhandener Komponenten, z.B. einem Smartphone mit einem oder mehreren spezifischen Programm(en) zur Datenverarbeitung.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Seitenansicht eines Traktors und eines daran angeschlossenen Anbaugerätes,
- Fig. 2: eine Ansicht einer Anschluss-Schnittstelle im Heckbereich des Traktors gemäß Fig. 1, und

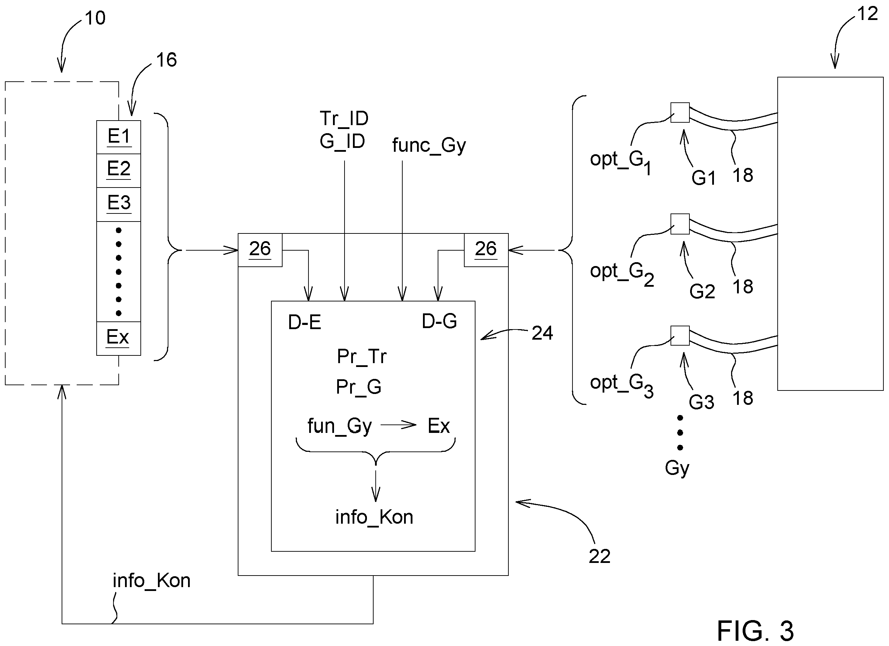

- Fig. 3: eine schematische blockschaltbildartige Darstellung von Funktionseinheiten zur Durchführung des erfindungsgemäßen Verfahrens.

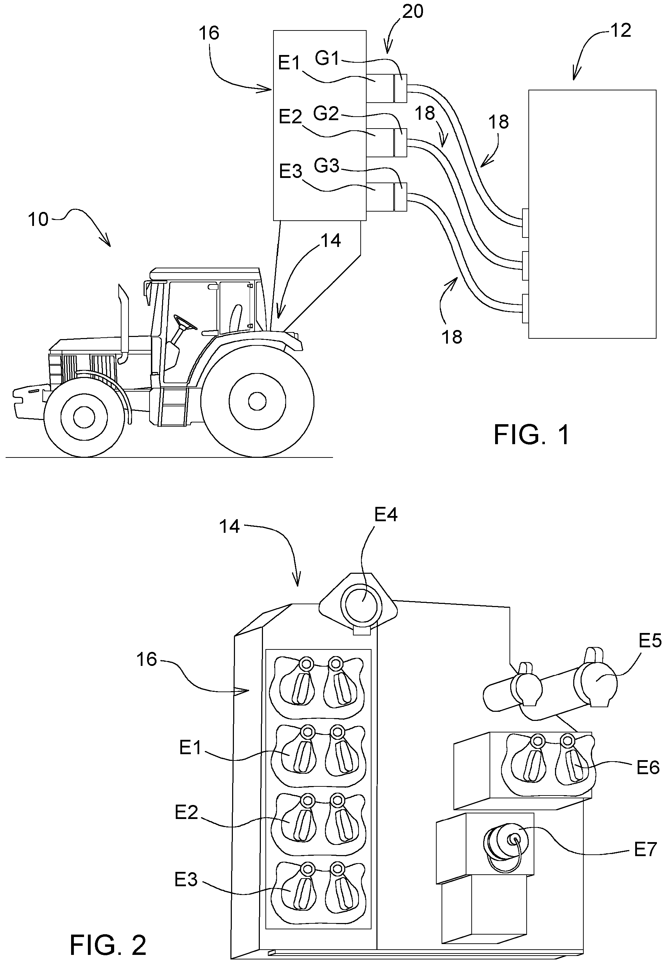

Fig. 1 zeigt ein Fahrzeug in Form eines Traktors 10 sowie ein daran anschließbares Gerät in Form eines landwirtschaftlichen Anbaugerätes 12. Für den Anschluss weist der Traktor 10 in seinem Heckbereich 14 eine Anschluss-Schnittstelle 16 auf. Letztere ist mehr oder weniger zwischen den beiden Hinterreifen des Traktors 10 angeordnet und deshalb zur besseren Darstellung nach Art einer Explosionszeichnung optisch herausgestellt. Die Anschluss-Schnittstelle 16 und das Anbaugerät 12 sind in Fig. 1 lediglich schematisch dargestellt.

In Fig. 2 ist die Anschluss-Schnittstelle 16 mit einer Vielzahl von Fahrzeuganschlüssen E, genauer gesagt E1 bis Ex, ausgestattet, wobei "x" eine natürliche Zahl ist. An die einzelnen Fahrzeuganschlüsse E ist jeweils ein Geräteanschluss G des Anbaugerätes 12 anschließbar. Von den möglichen Geräteanschlüssen G1 bis Gy ("y" ist eine natürliche Zahl) sind in Fig. 1 beispielhaft drei Geräteanschlüsse G1, G2, G3 dargestellt, welche jeweils an einem Leitungsende einer Leitung 18 des Anbaugerätes 12 angeordnet sind.

Somit kann eine von dem Traktor 10 generierte Energie über die Fahrzeuganschlüsse E1 bis Ex und die mit ihnen verbundenen Geräteanschlüsse G1 bis Gy an das Anbaugerät 12 abgegeben werden. Folglich wirkt der Fahrzeuganschluss Ex als ein Energieanschluss zur Energieabgabe an den Geräteanschluss Gy, während letzterer an einem Leitungsende der Leitung 18 angeordnet ist und zur Energieaufnahme von dem Fahrzeuganschluss Ex ausgebildet ist.

Vorzugsweise handelt es sich bei den Leitungen 18 um Hydraulikleitungen, welche von einem Hydrauliksystem des Traktors 10 erzeugte hydraulische Energie über die Fahrzeuganschlüsse E-x zu dem Anbaugerät 12 transportieren.

Stellvertretend für unterschiedlich mögliche Anschlusskonfigurationen sind bei der schematisch dargestellten Anschlusskonfiguration 20 gemäß Fig. 1 die drei Geräteanschlüsse G1, G2, G3 mit dem jeweilig zugeordneten Fahrzeuganschluss E1, E2, E3 verbunden.

Das Verfahren ermöglicht eine Erkennung der aktuellen technischen Funktion an dem jeweiligen Fahrzeuganschluss Ex, wenn das Gerät (z.B. das Anbaugerät 12) an das Fahrzeug (z.B. an den Traktor 10) angeschlossen ist. Zur Durchführung des Verfahrens ist eine Erkennungsvorrichtung 22, z.B. ein mobiles Gerät, mit einer Datenverarbeitungseinheit 24 und mindestens einer Kamera 26 vorgesehen.

Zunächst wird in einer Einlern- oder Initialisierungsphase des Verfahrens ein Fahrzeug, z.B. der Traktor 10, ausgewählt, welches für eine spätere Anschlusskonfiguration mit einem Gerät, z.B. dem Anbaugerät 12, in Frage kommt. Nacheinander können auch mehrere unterschiedliche Fahrzeuge ausgewählt werden, welche später jeweils für eine Anschlusskonfiguration mit einem Gerät oder unterschiedlichen Geräten in Frage kommen. Analog werden in der Einlern- oder Initialisierungsphase des Verfahrens auch ein Gerät oder mehrere Geräte ausgewählt.

Für die in der Einlern- oder Initialisierungsphase ausgewählten Fahrzeuge bzw. Traktoren 10 und Geräte bzw. Anbaugeräte 12 wird jeweils eine fahrzeugspezifische Kennung Tr_ID und eine gerätespezifische Kennung G_ID verwendet, welche in der Erkennungsvorrichtung 22 gespeichert wird. Die jeweilige Kennung wird während der Auswahl beispielsweise automatisch von einem Anwendungsprogramm der Erkennungsvorrichtung 22 generiert oder von der Erkennungsvorrichtung 22 über Bilddaten (z.B. Foto eines Typenschildes, einer anderen im Fahrzeug angezeigten Kodierung oder eines Barcodes, QR-Codes) oder Funkdaten (z.B. Bluetooth, Wifi) eingelesen.

Der fahrzeugspezifischen Kennung Tr_ID werden in der Einlern- oder Initialisierungsphase bestimmte Fahrzeugprofil-Daten Pr_Tr zugeordnet. Letztere werden in Abhängigkeit von einer optischen Erfassung der Anschluss-Schnittstelle 16 des Traktors 10 generiert. Dabei generiert die Kamera 26 Bilddaten D-E, welche in der Datenverarbeitungseinheit 24 verarbeitet und dann der Kennung Tr_ID als Fahrzeugprofil-Daten Pr_Tr zugeordnet werden. Während dieser optischen Erfassung ist die Anschluss-Schnittstelle 16 frei von Geräteanschlüssen Gy, d.h. der Traktor 10 befindet sich in einem bezüglich des Anschlussgerätes 12 unverbundenem Zustand.

Die Fahrzeugprofil-Daten Pr_Tr repräsentieren mindestens ein Anschlussmerkmal (z.B. Farbkodierung, Position, Produktionsinformation des Herstellers) der Fahrzeuganschlüsse Ex dieses Traktors 10. Optional können die Fahrzeugprofil-Daten Pr_Tr noch korrigiert werden.

Analog werden in der Einlern- oder Initialisierungsphase auch der gerätespezifischen Kennung G_ID bestimmte Geräteprofil-Daten Pr_G zugeordnet. Letztere werden in Abhängigkeit von einer optischen Erfassung der Geräteanschlüsse Gy des Anbaugerätes 12 generiert. Dabei generiert die Kamera 26 Bilddaten D-G, welche in der Datenverarbeitungseinheit 24 verarbeitet und dann der Kennung Tr_G als Geräteprofil-Daten Pr_G zugeordnet werden. Während dieser optischen Erfassung sind die Geräteanschlüsse Gy an keine Fahrzeuganschlüsse Ex angeschlossen, d.h. das Anbaugerät 12 befindet sich in einem bezüglich des Traktors 10 unverbundenem Zustand.

Die Geräteprofil-Daten Pr_G repräsentieren mindestens ein Anschlussmerkmal der Geräteanschlüsse Gy dieses Anbaugerätes 12. Optional können die Fahrzeugprofil-Daten Pr_Tr noch korrigiert werden.

Zur optischen Identifizierung weist jeder Geräteanschluss Gy eine optische Kennzeichnung opt_Gy (z.B. Farbe oder Form durch montierte Bauteile) auf, die als ein Anschlussmerkmal dienen kann. Als ein weiteres Anschlussmerkmal dient eine vordefinierte technische Funktion func_Gy des jeweiligen Geräteanschlusses Gy. Die spezifische technische Funktion func_Gy wird vordefiniert, indem nach der optischen Erfassung des Geräteanschlusses Gy oder sämtlicher Geräteanschlüsse Gy dem jeweiligen Geräteanschluss Gy die spezifische technische Funktion func_Gy zugeordnet wird. Dies erfolgt beispielsweise durch eine entsprechende Dateneingabe an der Erkennungsvorrichtung 22.

Wie bereits erwähnt, bilden die miteinander verbundenen Fahrzeuganschlüsse Ex und Geräteanschlüsse Gy die spezifische Anschlusskonfiguration 20 zwischen dem Traktor 10 und einem daran angeschlossenen Anbaugerät 12. Beispielsweise schließt ein Nutzer die Geräteanschlüsse Gy an die gewünschten Fahrzeuganschlüsse Ex des Traktors 10 derart an, dass Geräteanschlüsse Gy mit einer spezifischen Farbkodierung an gleichfarbigen Fahrzeuganschlüssen Ex angeschlossen sind.

Vorzugsweise ist bereits vor Bildung der Anschlusskonfiguration 20 in der Erkennungsvorrichtung 22 bekannt, welcher Traktor 10 und welches Anbaugerät 12 miteinander verbunden werden sollen. Hierzu wählt der Nutzer den Traktor 10 und das Anbaugerät 12 aus, z.B. durch eine entsprechende Dateneingabe an dem Erkennungsgerät 22. Da dieser Traktor 10 und dieses Anbaugerät 12 mittels ihrer Kennung Tr_ID bzw. G_ID bereits angelegt sind, können die entsprechend zugeordneten Fahrzeugprofil-Daten Pr_Tr und Geräteprofil-Daten Pr_G automatisch abgerufen und für die Datenverarbeitung in Kombination mit der spezifischen Anschlusskonfiguration 20 zur Verfügung gestellt werden.

Die vorhandene Anschlusskonfiguration 20 wird mittels der Kamera 26 optisch erfasst. Beispielsweise erstellt der Nutzer mittels der Kamera 26 aus verschiedenen Winkeln mehrere Bilder von den miteinander verbundenen Geräteanschlüssen Gy und Fahrzeuganschlüssen Ex. Eine erfolgreiche Identifizierung der Anschlüsse Gy, Ex kann von der Erkennungsvorrichtung optisch und/oder akustisch signalisiert werden.

In Abhängigkeit von der erfolgreich optisch erfassten Anschlusskonfiguration 20 wird die vordefinierte technische Funktion func_Gy des jeweiligen Geräteanschlusses Gy dem mit ihm verbundenen Fahrzeuganschluss Ex zugeordnet. Sind sämtliche Zuordnungen der technischen Funktionen func_Gy erfolgt, wird in Abhängigkeit von diesen Zuordnungen eine Konfigurationsinformation info_Kon bereitgestellt, welche die technische Funktion func_Gy an dem jeweiligen Fahrzeuganschluss Ex beinhaltet. Hierdurch kann der Nutzer die technische Funktion func_Gy an dem jeweiligen Fahrzeuganschluss Ex unmittelbar erkennen.

Beispielsweise werden die durchgeführten Zuordnungen von dem Nutzer an der Erkennungsvorrichtung 22 bestätigt. Nach der Bestätigung kann die Konfigurationsinformation info_Kon an den Traktor 10 übermittelt werden, z.B. an einer Anzeigeeinheit im Fahrerhaus dargestellt werden. Der Nutzer kann dann vom Traktor 10 aus das Anbaugerät 12 direkt über die angezeigten technischen Funktionen func_Gy bedienen und muss nicht wissen, welche Leitung 18 an welchem Fahrzeuganschluss Ex angeschlossen ist.

Der guten Ordnung halber sei erwähnt, dass sämtliche dargestellten Details und Bauteile nicht notwendigerweise maßstäblich offenbart sind. Einzelne Details sind teilweise lediglich schematisch und/oder unmaßstäblich dargestellt.

## Patentansprüche

1. Verfahren zur Erkennung einer an eine Anschluss-Schnittstelle (16) eines Fahrzeugs (10) angeschlossenen technischen Funktion (func_Gy) eines Gerätes (12), wobei
- die Anschluss-Schnittstelle (16) mehrere Fahrzeuganschlüsse (Ex) aufweist und das Gerät (12) mehrere Geräteanschlüsse (Gy) aufweist, von denen mindestens ein Geräteanschluss (Gy) mit einem der Fahrzeuganschlüsse (Ex) verbunden ist,
- die miteinander verbundenen Fahrzeuganschlüsse (Ex) und Geräteanschlüsse (Gy) eine Anschlusskonfiguration (20) bilden, welche optisch erfasst wird,
- in Abhängigkeit von der optisch erfassten Anschlusskonfiguration (20) eine vordefinierte technische Funktion (func_Gy) des Geräteanschlusses (Gy) dem mit ihm verbundenen Fahrzeuganschluss (Ex) zugeordnet wird,
- in Abhängigkeit von sämtlichen derartigen Zuordnungen eine Konfigurationsinformation (info_Kon) bereitgestellt wird zur Erkennung der technischen Funktion (func_Gy) an dem Fahrzeuganschluss (Ex).

2. Verfahren nach Anspruch 1, **dadurch gekennzeichnet, dass**
- vor der optischen Erfassung der Anschlusskonfiguration (20), insbesondere vor dem Anschließen des Gerätes (12) an die Anschluss-Schnittstelle (16), das Fahrzeug (10) ausgewählt wird und/oder das Gerät (12) ausgewählt wird, und
- eine das ausgewählte Fahrzeug (10) repräsentierende fahrzeugspezifische Kennung (Tr_ID) verwendet wird, und/oder eine das ausgewählte Gerät (12) repräsentierende gerätespezifische Kennung (G_ID) verwendet wird.

3. Verfahren nach Anspruch 2, **dadurch gekennzeichnet, dass** der fahrzeugspezifischen Kennung (Tr_ID) Fahrzeugprofil-Daten (Pr_Tr) zugeordnet sind oder werden, welche mindestens ein Anschlussmerkmal der Fahrzeuganschlüsse (Ex) dieses Fahrzeugs (10) repräsentieren.

4. Verfahren nach Anspruch 3, **dadurch gekennzeichnet, dass** die Fahrzeugprofil-Daten (Pr_Tr) in Abhängigkeit von einer optischen Erfassung der Anschluss-Schnittstelle (16) des Fahrzeugs (10) in einem bezüglich des Gerätes (12) unverbundenen Zustand generiert werden.

5. Verfahren nach Anspruch 2, **dadurch gekennzeichnet, dass** der gerätespezifischen Kennung (G_ID) Geräteprofil-Daten (Pr_G) zugeordnet sind oder werden, welche mindestens ein Anschlussmerkmal (opt_Gy, func_Gy) der Geräteanschlüsse (Gy) dieses Geräts (12) repräsentieren.

6. Verfahren nach Anspruch 5, **dadurch gekennzeichnet, dass** die Geräteprofil-Daten (Pr_G) in Abhängigkeit von einer optischen Erfassung der Geräteanschlüsse (Gy) des Gerätes (12) in einem bezüglich des Fahrzeugs (10) unverbundenen Zustand generiert werden.

7. Verfahren nach Anspruch 5 oder 6, **dadurch gekennzeichnet, dass** das Anschlussmerkmal eine optische Kennzeichnung (opt_Gy) des Geräteanschlusses (Gy) aufweist.

8. Verfahren nach einem der Ansprüche 5 bis 7, **dadurch gekennzeichnet, dass** das Anschlussmerkmal die vordefinierte technische Funktion (func_Gy) des Geräteanschlusses (Gy) aufweist.

9. Verfahren nach einem der Ansprüche 6 bis 8, **dadurch gekennzeichnet, dass** die technische Funktion (func_Gy) des Geräteanschlusses (Gy) vordefiniert wird, indem nach der optischen Erfassung des Geräteanschlusses (Gy) diesem Geräteanschluss (Gy) die technische Funktion (func_Gy) zugeordnet wird.

10. Verfahren nach einem der vorhergehenden Ansprüche, **dadurch gekennzeichnet, dass**
- mindestens ein Fahrzeuganschluss (Ex) als ein Energieanschluss zur Energieabgabe an einen Geräteanschluss (Gy) ausgebildet ist, und/oder
- mindestens ein an einer Anschlussleitung (18) des Gerätes (12) angeordneter Geräteanschluss (Gy) zur Energieaufnahme von einem Fahrzeuganschluss (Ex) ausgebildet ist.
